# EUROPÄISCHE PATENTSCHRIFT

(11) **EP 3 109 944 B1**
(45) Veröffentlichungstag und Bekanntmachung des Hinweises auf die Patenterteilung: **08.12.2021**
(21) Anmeldenummer: 15305968.8
(22) Anmeldetag: 23.06.2015
(51) Int. Cl.: H01R 13/02, H01R 4/62, H01R 43/02, H01R 4/02

(54) **VERFAHREN ZUR HERSTELLUNG EINER ELEKTRISCH WIRKSAMEN KONTAKTSTELLE AM ENDE EINES ELEKTRISCHEN LEITERS**
METHOD FOR PRODUCING AN ELECTRICALLY ACTIVE CONTACT POINT AT THE END OF AN ELECTRICAL CONDUCTOR
PROCEDE DE FABRICATION D'UN POINT DE CONTACT ELECTRIQUE SUR LA BORNE D'UN CONDUCTEUR ELECTRIQUE

(43) Veröffentlichungstag der Anmeldung: 28.12.2016
(73) Patentinhaber: Nexans, 92400 Courbevoie (FR); Technische Universität Ilmenau, 98693 Ilmenau (DE)
(72) Erfinder: STEINBERG, Helmut, 92721 Störnstein (DE); BERGMANN, Jean-Pierre, 99096 Erfurt (DE)
(74) Vertreter: Ipsilon

(56) Entgegenhaltungen:
- EP-A1- 0 174 285
- EP-A2- 0 239 389
- DE-A1- 2 325 294
- DE-A1- 3 915 286
- GB-A- 2 010 134
- JP-A- 2009 099 346
- JP-A- 2009 248 172
- US-A- 3 656 092
- US-A1- 2010 299 921

## Beschreibung

Die Erfindung bezieht sich auf ein Verfahren zur Herstellung einer elektrisch wirksamen Kontaktstelle am Ende eines elektrischen Leiters gemäß dem Oberbegriff des Patentanspruchs 1.

Ein solches Verfahren ist beispielsweise in der DE 2 325 294 A beschrieben.

Der mit dem Verfahren nach der Erfindung zu bearbeitende Leiter kann aus Aluminium oder aus einer Aluminiumlegierung bestehen, Der Einfachheit halber wird im Folgenden nur Aluminium erwähnt, stellvertretend auch für eine Aluminiumlegierung. Das Wort "Verwirken" bedeutet insbesondere den Begriff "Verseilen", aber auch "Verdrehen" oder allgemein "Zusammenhalten".

Leiter aus Aluminium werden insbesondere aus Gewichts- und Kostengründen vermehrt als Ersatz für Kupferleiter verwendet. Haupteinsatzgebiete derartiger Leiter sind beispielsweise die Automobil- und die Flugzeugtechnik. Die geringere elektrische Leitfähigkeit des Aluminiums gegenüber Kupfer spielt für die meisten Anwendungen keine Rolle. Probleme ergeben sich aber beim Anbringen von Kontaktteilen an den Leitern, da Aluminiumleiter von einer elektrisch sehr schlecht leitenden Oxidschicht umgeben sind. Dieser Mangel macht sich besonders bei aus einer Vielzahl von Einzeldrähten bestehenden, auch als Litzenleiter bezeichneten Leitern bemerkbar, von denen jeder von einer ohne Sonderbehandlung nicht zu vermeidenden Oxidschicht umgeben ist. Die geschilderte Problematik ist seit langem bekannt und in zahlreichen Druckschriften beschrieben. Diese beziehen sich im Wesentlichen auf Verfahren, mit denen die Oxidschichten aufgebrochen werden und/oder bei denen Zusatzstoffe eingesetzt werden, um nach Möglichkeit alle Drähte eines Litzenleiters an der Führung elektrischen Stroms zu beteiligen. Die Oxide verbleiben aber stets als störende Teile am Ende des Leiters. Im Folgenden sind dafür beispielsweise fünf Schriften erwähnt.

Aus der DE 102 23 397 B4 geht ein Verfahren hervor, mit dem ein Kontaktelement elektrisch gut leitend an einem Litzenleiter aus Aluminiumdrähten angebracht werden soll. Dazu wird auf das Ende des Litzenleiters zunächst eine an der Innenseite verzinnte metallische Hülse aufgeschoben. Die Einzeldrähte werden dann an ihren Stirnseiten untereinander und mit der Hülse mittels Ultraschalls oder Schutzgasschweißens verzinnt oder verschweißt. Die die Einzelleiter umgebenden Oxidschichten sollen dabei aufgebrochen werden. Es ergibt sich eine deckelartige Verzinnung bzw. Verschweißung am Ende des Litzenleiters. Abschließend wird das Kontaktelement aufgeschoben und mit dem Ende des Litzenleiters verpreßt. Die deckelartige Verzinnung bzw. Verschweißung wird vom Verpressen ausgenommen.

Die DE 103 46 160 B3 beschreibt ein Verfahren zur Kontaktierung eines als Litzenleiter ausgeführten Aluminiumleiters, bei welchem auf das Ende des Aluminiumleiters eine an der Innenseite verzinnte, beispielsweise aus Kupfer bestehende Kontaktklemme aufgeschoben wird. Die rohrförmig ausgeführte Kontaktklemme wird an der Stirnseite des Aluminiumleiters mittels Ultraschall-Verzinnung gemeinsam mit demselben verzinnt oder mittels eines bekannten Schweißverfahrens metallisch mit demselben verschweißt.

Bei dem Verfahren nach der DE 103 57 048 A1 wird auf das Ende eines aus Aluminium bestehenden Litzenleiters ein Vorrat eines Kontaktierungsmittels aufgebracht und zumindest bis in den Bereich seiner Schmelztemperatur erwärmt. Dabei soll über das Kontaktierungsmittel zur Ausbildung einer elektrischen Kontaktierung eine stoffliche Verbindung zwischen dem Litzenleiter und einem gleichzeitig oder anschließend aufgeschobenen topfartigen Kontaktelement hergestellt werden. Zum Aufbringen des Kontaktierungsmittels kann der Litzenleiter in ein Zinnbad eingetaucht werden. Dabei kann ein Teil des Litzenleiters zur Bildung einer frischen Trenn- oder Schneidfläche im Zinnbad abgetrennt oder abgeschnitten werden. Das Kontaktelement wird mit zugentlastender Wirkung um den Litzenleiter herumgepreßt.

Die DE 10 2011 018 353 A1 beschreibt ein Verfahren zum Verbinden eines Kontaktteils mit einem aus Aluminium bestehenden Litzenleiter. Auf den Litzenleiter wird an seinem Ende eine Stützhülse aufgebracht und mit demselben verpreßt. Anschließend wird ein rotationssymmetrisches Kontaktteil mit der Stirnseite des Litzenleiters verschweißt, beispielsweise mittels Rotationsreibschweißens. Dabei wird eine intermetallische Verbindung zwischen dem Kontaktteil und dem Litzenleiter gebildet.

In der DE 10 2011 089 207 A1 ist ein Verfahren zum Kontaktieren einer Litzenleitung, deren Einzeldrähte beispielsweise aus Aluminium bestehen, mit einem beispielsweise aus Kupfer bestehenden Kontaktteil beschrieben. In einem Abschnitt der Litzenleitung, in welchem die Einzeldrähte freiliegen, werden die Einzeldrähte verdichtet und miteinander verschweißt. Dieser Abschnitt der Litzenleitung wird mit dem Kontaktteil verschweißt. Für beide Schweißvorgänge wird beispielsweise ein Ultraschallschweißverfahren eingesetzt. Die Teile der Oxidschichten, welche die aus Aluminium bestehenden Einzeldrähte der Litzenleitung umgeben, bleiben im Wesentlichen erhalten, auch wenn die Oxidschichten durch den Ultraschall aufgebrochen werden.

Die EP 0 239 389 A2 betrifft einen Aluminiumdraht, der in einem als "Tropfen-Verbindung" bezeichneten Verfahren im Zusammenhang mit integrierten Schaltkreisen eingesetzt werden soll. Damit an der Spitze des Aluminiumdrahtes durch Erwärmung desselben ein symmetrischer Tropfen erzeugt werden kann, wird der Aluminiumdraht mit mechanisch stabilem Isoliermaterial beschichtet, das bei einer oberhalb der Schmelztemperatur von Aluminium liegenden Temperatur schmilzt und einen ausreichend hohen elektrischen Widerstand hat, um zu verhindern, dass sich ein auf eine Spitze des Leiters einwirkender Lichtbogen verlagert. Dadurch wird ein runder, achsensymmetrischer Tropfen erzeugt. Der mit dem mechanisch stabilen Isoliermaterial beschichtete Aluminiumdraht kann zur Bildung des Tropfens bis zu 2500 °C erwärmt werden. Diese Erwärmung dient dazu, an der Spitze des Aluminiumdrahtes, der von der Schicht aus stabilem Isoliermaterial umgeben ist, einen als Verbindungsmittel geeigneten, symmetrischen Tropfen zu formen. Statt des mechanisch stabilen Isoliermaterials kann auch eine dicke Oxidschicht eingesetzt werden.

Die EP 2 735 397 A1 beschreibt ein Verfahren zum elektrisch leitenden Verbinden eines Kontaktteils auf Kupferbasis mit einem aus einer Vielzahl von Aluminium enthaltenden Einzeldrähten bestehenden elektrischen Leiter. Ein topfartiges Kontaktteil, das einen Boden und eine einstückig mit demselben verbundene und von demselben abstehende zylindrische Hülse aufweist, wird unter dichter Anlage der Hülse am Leiter so weit auf denselben aufgeschoben, bis die Stirnfläche des Leiters am Boden des Kontaktteils anliegt. Danach wird außen an das Kontaktteil, beispielsweise im Bereich des Bodens desselben, ein sich drehendes Werkzeug mit anhaltendem Druck angelegt, bis infolge von dabei durch Reibung erzeugter erhöhter Temperatur das Material des Leiters so weit erweicht ist, daß es durch Diffusion mit dem Kontaktteil verschweißt.

Aus der JP 2009 099346 A geht ein Verfahren hervor, mit dem die Stabilität (Zuverlässigkeit) zwischen einem Endenabschluß und einer Vielzahl von elektrischen Drähten verbessert werden soll. Die Drähte bestehen aus Aluminium oder aus einer Aluminiumlegierung. Sie sind in zwei jeweils von einer Isolierung umgebenen Leitungen enthalten. Die Leitungen werden mit horizontalem Verlauf angeordnet und an den freien Enden der zu einem Bündel zusammengefaßten Drähte wird durch Schmelzen und Schweißen ein für alle Drähte gemeinsames Bauteil erzeugt. Mit dem gemeinsamen Bauteil wird außerdem unter Ausnutzung des Schweißvorgangs eine am Ende der Drähte verbleibende Hülse angebracht, welche die Drähte und auch deren Isolierung umgibt. Die am Ende der Verbindungsstelle verbleibende Hülse dient der verbesserten Stabilität der ganzen Verbindung.

Die eingangs erwähnte DE 2 325 294 A beschreibt ein Verfahren zur Herstellung einer elektrisch wirksamen Kontaktstelle am Ende eines elektrischen Leiters, der eine Vielzahl von miteinander verwirkten Drähten aus Aluminium aufweist, bei welchem um das Ende des mit vertikalem Verlauf angeordneten Leiters zunächst ein an demselben rundum anliegender, als Klemmkörper ausgeführter Halter so herumgelegt wird, dass der Leiter fest eingeklemmt ist und dass seine Spitze von oben zugänglich ist. Die Spitze des Leiters wird zur Bildung eines Kontaktteils unter Schutzgasabdeckung durch eine in axialer Richtung desselben auf seine Stirnfläche einwirkende Wärmequelle auf eine Temperatur von 2000 °C und höher erwärmt. Abschließend wird das Kontaktteil zusammen mit dem Ende des Leiters abgekühlt und der Halter wird entfernt. Auf dem als Klammer ausgeführten Halter ist ein Block aus Kohle angeordnet, der eine Vertiefung zur Aufnahme von geschmolzener Masse aufweist.

Der Erfindung liegt die Aufgabe zugrunde, das eingangs geschilderte Verfahren so zu gestalten, dass sich eine Kontaktstelle ergibt, in der das elektrisch leitende Material aller Drähte des Leiters in einer kompakten Einheit verbunden ist.

Diese Aufgabe wird entsprechend den kennzeichnenden Merkmalen des Patentanspruchs 1 gelöst.

Mit diesem Verfahren wird die Spitze des Leiters, dessen Drähte durch den rundum anliegenden Halter dicht zusammengehalten sind, durch eine gezielt auf seine Stirnfläche einwirkende Wärmequelle so hoch erwärmt bzw. erhitzt, bis alle Drähte an der Spitze des Leiters einschließlich der dieselben umgebenden Oxidschichten geschmolzen sind. Das geschmolzene Aluminium verbindet sich dadurch zu einem zusammenhängenden Körper, dem Kontaktteil, der ausschließlich aus Aluminium besteht, und der mit dem Aluminium aller Drähte des Leiters verbunden ist. Das Material der Oxidschichten der einzelnen Drähte wird durch die hohe Temperatur weggeschmolzen und gegebenenfalls so verlagert, dass es in dem aus Aluminium bestehenden Kontaktteil nicht enthalten ist. Nach dem Abkühlen des Endes des Leiters ist an dessen Spitze eine elektrisch wirksame Kontaktstelle geschaffen, die aus dem kompakten und homogenen, nur Aluminium enthaltenden Kontaktteil besteht. Es kann dadurch auf einfache Art und Weise eine elektrisch leitende Verbindung zu einem beispielsweise aus Kupfer bestehenden Kontaktelement hergestellt werden, in der sichergestellt ist, daß der ganze elektrisch leitende Querschnitt des Leiters erfaßt ist.

Das Verfahren wird so ausgeführt, dass der Halter so an der Spitze des Leiters angebracht wird, dass er über den Leiter hinausragt. Der Halter umschließt dann an der Spitze des Leiters einen Hohlraum und hat dadurch für das durch die Wärmequelle erzeugte Kontaktteil eine begrenzende Funktion nach Art einer Kokille.

Als Wärmequelle können beispielsweise ein Plasmalichtbogen, ein Laserstrahl, ein Elektronenstrahl, eine WIG (Wolfram-Inert-Gas)-Stromquelle oder eine MSG (Metall-Schutz-Gas)-Stromquelle dienen, welche Temperaturen von beispielsweise 2000 °C und höher erzeugen, bei denen die Oxidschichten des Leiters quasi verdampft werden. Die von den unterschiedlichen Wärmequellen erzeugten Temperaturen können bis zu 3500 °C betragen. Dabei reicht eine sehr kurzzeitige Erwärmung der Leiterspitze von beispielsweise 2 Sekunden aus.

Die Erwärmungs- bzw. Erhitzungszeit kann für das WIG-Verfahren zwischen 2 Sekunden und 6 Sekunden liegen. Der Schmelzvorgang wird unter Schutzgasabdeckung durchgeführt.

Als Halter wird mit Vorteil ein beispielsweise aus zwei Teilen bestehender Klemmkörper eingesetzt, der nach Fertigstellung der Klemmung das Leiterende fest umgibt. Der Klemmkörper kann vorzugsweise aus Kupfer bestehen. Bei ausreichender Dimensionierung kann er zusätzlich als Schutz von unter bzw. hinter demselben liegenden Teilen gegenüber der Wärme der Wärmequelle dienen, beispielsweise für eine den Leiter umgebende Isolierung.

Das Verfahren wird so ausgeführt, dass der Leiter mit vertikalem Verlauf in dem Halter festgelegt wird. Das aufgeschmolzene Aluminium tropft dabei nicht von der Leiterspitze ab.

Nach Beendigung des Verfahrens einschließlich Abkühlung befindet sich an der Spitze des Leiters mit dem Kontaktteil eine komplett aus Aluminium bestehende Kontaktstelle. Sie kann direkt zur Verbindung mit einem Kontaktelement verwendet werden. Bei einer späteren Weiterverarbeitung kann eine Oxidschicht des Kontaktteils zunächst unter Schutzgas entfernt werden.

Das Verfahren nach der Erfindung wird anhand der Zeichnungen als Ausführungsbeispiel erläutert.

Es zeigen:
Fig. 1 und 2 in schematischer Darstellung das Ende eines elektrischen Leiters in zwei unterschiedlichen Bearbeitungsstadien.
Fig. 3 eine Anordnung zur Durchführung des Verfahrens nach der Erfindung ebenfalls in schematischer Darstellung.
Fig. 4 eine Verbindungsstelle zwischen einem Leiter und einem Kontaktelement.

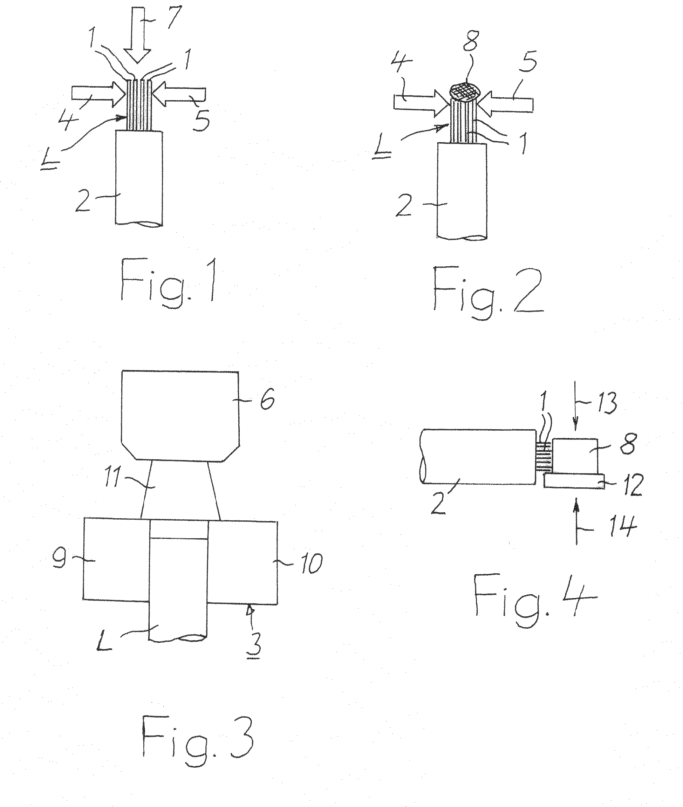

Das Verfahren nach der Erfindung wird anhand der Fig. 1 bis 3 mit vertikal angeordnetem Leiter erläutert.

In Fig. 1 ist das Ende eines Drähte 1 aus Aluminium aufweisenden elektrischen Leiters L dargestellt. Die Drähte 1 sind im Leiter L vorzugsweise miteinander verseilt. Sie sind in Fig. 1 der Deutlichkeit halber getrennt voneinander dargestellt, und zwar lediglich vier Drähte 1. Der Leiter L ist von einer Isolierung 2 umgeben, die an seinem Ende zur Freilegung der Drähte 1 entfernt ist. Die Drähte 1 sind am Ende des Leiters L durch einen Halter 3 (Fig. 3) zusammengehalten und festgelegt, der durch zwei Pfeile 4 und 5 angedeutet ist. Auf die nach oben weisende Stirnseite des Leiters L wirkt eine Wärmequelle 6 (Fig. 3) ein, welche durch einen Pfeil 7 angedeutet ist.

Die Wärmequelle wirkt kurzzeitig, beispielsweise für 4 Sekunden, auf die Stirnfläche des Leiters L ein, und zwar, wie bereits erwähnt, mit Schutzgasabdeckung derselben. Die Spitze des Leiters L wird dabei auf beispielsweise 2300 °C erwärmt, so dass das Aluminium schmelzflüssig wird. Das Aluminium aller Drähte 1 verbindet sich dadurch zu einem einteiligen, homogenen Kontaktteil 8, das an der Spitze des Leiters L verbleibt.

Als Halter 3 wird mit Vorteil ein aus zwei Teilen 9 und 10 bestehender Klemmkörper eingesetzt, der den Leiter L fest einklemmt. Er besteht vorzugsweise aus Kupfer. Darunter liegende Bereiche, insbesondere die Isolierung 2 des Leiters L, werden durch den Halter 3 bzw. durch den Klemmkörper gegenüber der Wärmequelle 6 abgeschirmt.

Der Abstand der Wärmequelle 6 zum Halter 3 ist von der jeweils eingesetzten Wärmequelle abhängig. Der aus der Wärmequelle 6 austretende Wärmestrahl ist durch eine kegelförmige Begrenzung 11 angedeutet.

Der Leiter L ist gemäß Fig. 3 auch so im Halter 3 befestigt, dass derselbe über den Leiter L hinausragt. Das Kontaktteil 8 liegt dadurch innerhalb des Halters 3, welcher dasselbe rundum begrenzt, nach Art einer Kokille.

Nach der kurzzeitigen Erwärmung bzw. Erhitzung des Endes des Leiters L ist, wie erwähnt, das einteilige, homogene Kontaktteil 8 gebildet. Das Ende des Leiters L wird dann abgekühlt und der Halter 3 wird entfernt.

Der Leiter L kann danach mit einem beispielsweise aus Kupfer bestehenden Kontaktelement 12 verbunden werden. Dazu wird das Kontaktteil 8 vorher vorzugsweise zu einem rechteckigen Gebilde geformt, so wie es in Fig. 4 angedeutet ist. Kontaktteil 8 und Kontaktelement 12 können miteinander verschweißt werden. Eine entsprechende Einrichtung ist durch Pfeile 13 und 14 angedeutet. Es kann beispielsweise eine Ultraschallschweißeinrichtung eingesetzt werden.

## Patentansprüche

1. Verfahren zur Herstellung einer elektrisch wirksamen Kontaktstelle am Ende eines elektrischen Leiters (L), der eine Vielzahl von miteinander verwirkten Drähten (1) aus Aluminium oder einer Aluminiumlegierung aufweist, bei welchem um das Ende des mit vertikalem Verlauf angeordneten Leiters (L) zunächst ein an demselben rundum anliegender, als Klemmkörper ausgeführter Halter (3) so herumgelegt wird, dass der Leiter (L) fest eingeklemmt ist und dass seine Spitze von oben zugänglich ist, bei welchem danach die Spitze des Leiters (L) zur Bildung eines Kontaktteils (8) unter Schutzgasabdeckung durch eine in axialer Richtung desselben auf seine Stirnfläche einwirkende Wärmequelle (6) auf eine Temperatur von 2000 °C und höher erwärmt wird, und bei welchem abschließend das Kontaktteil (8) zusammen mit dem Ende des Leiters (L) abgekühlt und der Halter (3) entfernt wird, **dadurch gekennzeichnet,**
- **dass** der Leiter (L) im Halter (3) so angeordnet wird, dass der Halter (3) über das Ende des Leiters (L) hinausragt, so dass er an der Spitze des Leiters (L) einen Hohlraum umschließt, der für das durch die Wärmequelle (6) erzeugte Kontaktteil (8) eine begrenzende Funktion nach Art einer Kokille hat, und
- **dass** die Spitze des Leiters (L) durch die Wärmequelle (6) sehr kurzzeitig erwärmt wird, mit einer zwischen 2 Sekunden und 6 Sekunden liegenden Zeitdauer, wodurch das Material von die einzelnen Drähte (1) des Leiters (L) umgebenden Oxidschichten weggeschmolzen bzw. verdampft wird, so dass das mit allen Drähten (1) des Leiters (L) verbundene Kontaktteil (8) ausschließlich aus Aluminium besteht.

2. Verfahren nach Anspruch 1, **dadurch gekennzeichnet, dass** für das Aufschmelzen des Leiters (2) an seiner Spitze ein Plasmalichtbogen oder ein Laserstrahl oder ein Elektronenstrahl oder eine Wolfram-Inert-Gas-Stromquelle oder eine Metall-Schutz-Gas-Stromquelle eingesetzt werden.

## Claims

1. A method for producing an electrically active contact point at the end of an electrical conductor (L), which has a plurality of intertwined wires (1) made of aluminum or an aluminum alloy, in which initially a holder (3) is laid around the end of the conductor (L) arranged with a vertical course, which holder is designed as a clamping body and abuts all around against said end of the conductor, such that the conductor (L) is firmly clamped and that its tip is accessible from above, in which the tip of the conductor (L) is then heated to a temperature of 2000 °C or higher in order to form a contact part (8) under protective gas cover by means of a heat source (6) acting in the axial direction of the same on its end face, and in which finally the contact part (8) together with the end of the conductor (L) is cooled off and the holder (3) is removed, **characterized in**
- **that** the conductor (L) is arranged in the holder (3) such that the holder (3) projects beyond the end of the conductor (L), so that it surrounds a cavity on the tip of the conductor (L), which cavity has a limiting function for the contact part (8) generated by the heat source (6) in the manner of a mold, and
- **that** the tip of the conductor (L) is heated very briefly by the heat source (6), with a time duration of between 2 seconds and 6 seconds, whereby the material of oxide layers surrounding the individual wires (1) of the conductor (L) is melted away or evaporated, so that the contact part (8) connected to all of the wires (1) of the conductor (L) consists exclusively of aluminum.

2. The method according to claim 1, **characterized in that** a plasma arc or a laser beam or an electron beam or a tungsten inert gas power source or a metal protection gas power source is used to melt the conductor (2) at its tip.

## Revendications

1. Procédé de fabrication d'un point de contact électriquement actif à l'extrémité d'un conducteur (L) électrique qui comporte une multiplicité de fils (1) enchevêtrés les uns avec les autres en aluminium ou en alliage d'aluminium, dans lequel d'abord un support (3) adjacent au conducteur et réalisé en tant que corps de serrage est placé tout autour de l'extrémité du conducteur (L) disposé de façon verticale de telle sorte que le conducteur (L) est coincé fixement et que sa pointe est accessible par le haut, dans lequel ensuite la pointe du conducteur (L) est chauffée à une température de 2 000 °C et plus pour la formation d'une partie de contact (8) sous atmosphère de gaz de protection par une source de chaleur (6) agissant sur sa surface frontale dans la direction axiale de cette pointe, et dans lequel enfin la partie de contact (8) est refroidie conjointement avec l'extrémité du conducteur (L) et le support (3) est enlevé, **caractérisée en ce que**
- le conducteur (L) est disposé dans le support (3) de telle sorte que le support (3) dépasse de l'extrémité du conducteur (L) de telle sorte qu'il enferme à la pointe du conducteur (L) une cavité qui a une fonction de limitation à la façon d'une coquille pour la partie de contact (8) produite par la source de chaleur (6), et
- **en ce que** la pointe du conducteur (L) est chauffée très brièvement par la source de chaleur (6), avec une durée comprise entre 2 secondes et 6 secondes, ce qui fait que le matériau de couches d'oxyde entourant les fils (1) individuels du conducteur (L) est fondu ou respectivement vaporisé de telle sorte que la partie de contact (8) raccordée à tous les fils (1) du conducteur (L) est constituée exclusivement d'aluminium.

2. Procédé selon la revendication 1, **caractérisé en ce que**, pour la fusion du conducteur (2), un arc plasma ou un faisceau laser ou un faisceau électronique ou une source de courant gaz inerte - tungstène ou une source de courant gaz de protection-métal est introduite à l'extrémité du conducteur.
